Europäisches Patentamt

European Patent Office

Office européen des brevets

(19)

(11) Veröffentlichungsnummer: **0 126 370**
**B1**

(12)

# EUROPÄISCHE PATENTSCHRIFT

(45) Veröffentlichungstag der Patentschrift:
**07.10.87**

(51) Int. Cl.⁴: **B 29 C 39/00**, B 29 C 39/14

(21) Anmeldenummer: **84105163.4**

(22) Anmeldetag: **08.05.84**

(54) Verfahren und Einrichtung zum kontinuierlichen Herstellen von Schaumstoffbahnen.

(30) Priorität: **20.05.83 DE 3318392**

(43) Veröffentlichungstag der Anmeldung:
**28.11.84 Patentblatt 84/48**

(45) Bekanntmachung des Hinweises auf die Patenterteilung:
**07.10.87 Patentblatt 87/41**

(84) Benannte Vertragsstaaten:
**AT BE DE FR GB IT**

(56) Entgegenhaltungen:
**EP - A - 0 021 158**
**DE - A - 2 135 672**
**DE - A - 2 653 829**
**US - A - 3 278 659**

(73) Patentinhaber: **BAYER AG, Konzernverwaltung RP Patentabteilung, D-5090 Leverkusen 1 Bayerwerk (DE)**

(72) Erfinder: **Hoffmann, Erwin, Martin-Buber-Strasse 47, D-5090 Leverkusen 3 (DE)**
Erfinder: **Pfeil, Dieter, Moltkestrasse 23, D-5600 Wuppertal (DE)**
Erfinder: **Bock, Rolf, Dipl.-Ing., Zedernweg 41, D-5090 Leverkusen 3 (DE)**

**Beschreibung**

Die Erfindung betrifft ein Verfahren und eine Einrichtung zur kontinuierlichen Herstellung von Schaumstoffbahnen mit mindestens einer von einer Rolle abziehbaren Deckschicht, wobei diese Deckschicht auf einer horizontalen oder leicht geneigten Unterlage gefördert wird und ein fliessfähiges Reaktionsgemisch auf eine der Unterlage zugeordnete, geneigte Ebene mittels eines über die Arbeitsbreite hin- und herwandernden Strahles aufgetragen wird; auf dieser Ebene herabläuft und mit der Deckschicht gefördert und auf ihr egalisiert wird; zur Schaumstoffbahn aufschäumt und schliesslich das Produkt aus Schaumstoffbahn und Deckschicht von der Unterlage abgenommen wird, wobei die Deckschicht über die geneigte Ebene an dieser anliegend gleitend geführt wird.

Schaumstoffbahnen werden in kontinuierlicher Arbeitsweise für die verschiedensten Zwecke hergestellt. In der Regel werden hierfür Reaktionskomponenten verwendet, welche weiche bis harte Polyurethan- oder Poly-Isocyanuratschaumstoffe bilden. Meist ist die Kombination der Schaumstoffschicht mit mindestens einer Deckschicht, vorzugsweise beidseitig mit Deckschichten, erwünscht. Aber auch zur Herstellung reiner Schaumstoffbahnen ohne Deckschichten bedarf es in der Praxis zunächst in der Regel einer aus Papier bestehenden unteren Deckfolie, auf welche das Reaktionsgemisch aufgetragen wird (DE A-2 135 672). Dabei wird die Papierfolie über eine geneigte Ebene an dieser anliegend geführt. Die Fördergeschwindigkeit ist so gering, dass das Reaktionsgemisch sofort hinter der Auftragsstelle aufschäumt und einen Schaumblock bildet. Die geneigte Ebene bildet zusammen mit einem anschliessenden Transportband eine Mulde, wobei die Papierfolie im Bereich des Überganges zwischen geneigter Ebene und Transportband durch Unterdruck zum Anliegen gebracht wird. In diesem Bereich ist der Aufschäumvorgang bereits im wesentlichen abgeschlossen. Die Merkmale des Oberbegriffs der Ansprüche 1 und 3 sind aus diesem Dokument bekannt.

Die Papierfolie muss später wieder abgezogen werden. Alle Versuche, Schaumstoffbahnen ohne Deckschichten herzustellen, beispielsweise durch Verwendung von Trennmitteln zum Schutz der Einrichtungsteile, schlugen fehl.

Derartige Schaumstoffbahnen mit mindestens einer Deckschicht werden in Stärken von wenigen mm bis zu Blöcken von über 1 m Höhe produziert.Je nach Stärke der gewünschten Schaumstoffbahn muss das Reaktionsgemisch in Form eines Filmes entsprechender Stärke auf die Deckschicht aufgegeben werden. Je dünner der Gemischfilm sein muss, desto schwieriger ist es, einen gleichmässigen Gemischfilm gewünschter Dicke zu erzeugen. Unter Hinblick auf die Viskosität des Reaktionsgemisches, die Fördergeschwindigkeit, die Auftragsmenge und die Auftragtechnik können Schwierigkeiten zum Erzielen eines gleichmässigen Gemischfilmes bereits bei der Herstellung von Schaumstoffbahnen mit einer Dicke von 30 mm abwärts beginnen und werden umso grösser, je geringer die Schaumstoffdicke werden soll und damit die Dicken des aufzutragenden Gemischfilmes. Ein ungleichmässiger Gemischfilm verursacht beim offenen Aufschäumen, d.h. ohne Abdeckung durch eine obere Deckschicht, eine Bahn mit unregelmässiger Dicke und Haut. Bei der Herstellung in allgemein üblicher Weise auf dem sog. Doppeltransportband bilden sich Stellen unterschiedlicher Dichte und es können zwischen der Oberfläche des Schaumstoffes und der darüberliegenden oberen Deckschicht Luftblasen eingeschlossen werden.

Bei den Doppeltransportbändern wird seit vielen Jahren eine Auftragsart verwendet, bei welcher durch einen quer zur Förderrichtung hin- und hergehenden Mischkopf ein zeilenförmiger Auftrag des Reaktionsgemisches bewirkt wird. Störend ist hierbei der grössere Gemischauftrag an den Umkehrpunkten und die auftragsfreien Dreiecke zwischen den zickzackförmig verlaufenden Auftragszeilen. Es ist auch bekannt (DE-A-2 653 829), bei einer Vorrichtung zum Beschichten der Rückseite von Teppichen mit Schaumstoff in Förderrichtung zwei Auftragsdüsen hintereinander vorzusehen, wobei Auftragsbereich und Aufschäumbereich in der gleichen Ebene liegen, so dass das aufgetragene Reaktionsgemisch insbesondere bei dünnem Auftrag kaum mehr ineinander verläuft, so dass Ungleichmässigkeiten erhalten bleiben und sich beim Aufschäumen ausprägen. Die Bildung eines gleichmässig dicken Gemischfilmes erfolgt am besten durch eine Spaltausbildung, die in der Regel durch eine Walze oder eine Rakel und dem Obertrum des Unterbandes gebildet wird, durch welchen die obere und die untere Deckschicht sowie das Reaktionsgemisch hindurchgeführt werden. Es versteht sich, dass hierbei immer ein Stau des Reaktionsgemisches vor der oberen Egalisierwalze vorhanden sein muss, wenn eine gleichmässige Filmstärke erzielt werden soll. Das Reaktionsgemisch in diesem Stau besitzt ein sehr breites Verweilzeitspektrum, was über die Arbeitsbreite wegen des Querflusses ausserdem noch unterschiedlich ist. Ein Reaktionsgemisch aus Gemischanteilen unterschiedlichen Alters ist aber für die Schaumstoffqualität nachteilig. Man hat auch schon versucht (US-PS 3 278 659), einseitig kaschierte Schaumstoffbahnen dadurch herzustellen, dass man einlaufseitig eine geneigte Ebene angeordnet hat und einen Mischkopf über die Arbeitsbreite hin- und hergehen lässt, der das Gemisch mittels eines einen runden Querschnitt aufweisenden Strahles aufträgt. Das Gemisch läuft unkontrolliert auf der geneigten Ebene herab und wird erst in einem im Bereich des Förderbandes angeordneten Spalt egalisiert. Hierbei wird keine untere Deckfolie verwendet, weshalb die Gefahr der Verschmutzung des Aufgabetisches und des endlosen Bandes besteht. Die Verwendung einer oberen Deckfolie ist deswegen erforderlich, weil die obere Egalisierwalze direkt mit dem Reaktionsgemisch in Berührung kommt und hierbei auch die Verwendung von Trennmitteln ein Anhaften auf Dauer nicht vermeiden könnte. Auch beim Betrieb dieser Einrichtung tritt das Problem des grossen Verweilzeitspektrums des Reaktionsgemisches vor dem Spalt auf. Je grösser die Arbeitsbreite ist, desto schwieriger wird die exakt gleiche Einstellung des Spaltes für die Breite. Bei dünnen Gemischfilmen im Bereich bis etwa 3 mm macht sich ein Unterschied in der Spaltbreite von wenigen zehntel Millimetern bereits sehr unangenehm bemerkbar.

Im wesentlichen benutzen alle praktizierten Verfahren dem Prinzip nach einen Egalisierspalt, der auf den verschiedensten vorrichtungstechnischen Ausführungsformen beruht. Aber keine Ausführungsform ist frei von den oben erwähnten grundsätzlichen Nachteilen. Es liegt also die Aufgabe vor, ein Verfahren und eine Einrichtung zu schaffen, mit welchen ein gleichmässiger Gemischfilm erzielbar ist, der aus einem Gemischauftrag mit schmalem Verweilzeitspektrum besteht.

Das neue ist darin zu sehen, dass

a) das Reaktionsgemisch auf die Deckschicht als ein sich in Förderrichtung vorhangartig erstreckender, flacher Strahl aufgegeben wird, und

b) die Bildung eines gleichmässig dicken Gemischfilms auf der Deckschicht lediglich durch Fliessen des Reaktionsgemisches während des Transportes der Deckschicht auf der geneigten Ebene zwischen der Aufgabestelle bis in den Übergang auf die Unterlage durchgeführt wird.

Das Merkmal a) bringt den Vorteil, dass sich der durch die Fördergeschwindigkeit der unteren Deckschicht ergebende Zeilenauftrag des Reaktionsgemisches infolge des Fächerstrahles sich selbst breit überdeckt, so dass zunächst zwar kein gleichmässiger Auftrag, aber im wesentlichen eine vollständige Benetzung der Deckschicht mit Reaktionsgemisch stattfindet. Dadurch ergeben sich die Voraussetzungen für den Fliessvorgang gemäss Merkmal b), der aus der Relativgeschwindigkeit zwischen der Fördergeschwindigkeit der Deckschicht und der Fliessgeschwindigkeit des Reaktionsgemisches auf der Deckschicht im Bereich der geneigten Ebene resultiert.

Bei Kenntnis dieser Lehre versteht es sich für den Fachmann, dass er nur dann die gleichmässige Filmbildung erzielen kann, wenn er die in der Regel als feste Parameter vorgegebene Viskosität des Reaktionsgemisches, Auftragsmenge, Oszillationsgeschwindigkeit des Mischkopfes, sowie die Fördergeschwindigkeit (wobei diese Parameter sich auch variieren lassen) in der Weise berücksichtigt, dass er zum Erzielen des gleichmässigen Gemischfilmes die Neigung der Ebene und die Fliessstrecke von der Gemischaufgabestelle bis in den Knick zwischen geneigter Ebene und Unterlage entsprechend gestaltet. Es versteht sich, dass man im Prinzip auch jeden Parameter ändern könnte, was aus betriebstechnischen Gründen aber unzweckmässig oder nur in gewissen Grenzen durchführbar wäre. Der Fachmann wird die optimale Einstellung am einfachsten durch empirische Versuche ermitteln, wobei er beispielsweise davon auszugehen hat, dass bei einer relativ hohen Gemischausstossmenge die Neigung der Ebene und der zur Verfügung stehende Fliessweg geringer sein können als bei einer kleinen Gemischauftragsmenge. Die Neigung der Ebene sollte zwischen 3 und 60°, vorzugsweise zwischen 10 und 30° betragen. Die für den Fliessvorgang zur Verfügung stehende Strecke auf der geneigten Ebene hat sich zwischen 15 und 150 cm als besonders geeignet erwiesen. Als weiterer wesentlicher Faktor spielt noch die gewünschte Schichtdicke eine Rolle. Für sie ist im wesentlichen der Verstreckungsvorgang des aufgetragenen Reaktionsgemisches infolge der Relativgeschwindigkeit zwischen Fördergeschwindigkeit und Fliessgeschwindigkeit des Gemisches ausschlaggebend.

Ein wesentlicher Unterschied des neuen Verfahrens liegt auch darin, dass während des Egalisiervorganges der sich bildende Gemischfilm eine freie Oberfläche besitzt. Somit kann nach dem neuen Verfahren in vorteilhafter Weise die Reaktion jederzeit einsetzen, auch wenn die Vergleichmässigung des Gemischfilmes noch nicht ganz abgeschlossen ist. Bei Verwendung eines Egalisierspaltes hingegen wäre eine Vorreaktion für die Qualität des Endproduktes von Nachteil.

Nach einer besonderen Durchführungsform des Verfahrens wird die Bildung des gleichmässig dicken Gemischfilmes durch Temperierung beeinflusst.

Durch die Temperierung wird der Fliessvorgang des Gemisches beeinflusst. Vorzugsweise findet in den verschiedenen Zonen unterschiedliche Temperierung statt, indem beispielsweise in den Bereichen des starken Gemischauftrages, d.h. am Rande der Aufarbeitsbreite, wo infolge der Umkehr des Mischkopfes mehr Reaktionsgemisch aufgetragen wird, durch höhere Temperierung im Vergleich zum mittleren Abschnitt die Viskosität des Reaktionsgemisches heraufgesetzt wird. Es kann auch zweckmässig sein, das Reaktionsgemisch in Arbeitsrichtung gesehen, zunächst zu kühlen und/oder am Ende der geneigten Ebene zu erwärmen. Es kann auch sinnvoll sein, die Deckschicht bereits beim Gleiten über die schiefe Ebene vor dem Gemischauftrag zu temperieren. Ob man heizt oder kühlt oder überhaupt temperiert, hängt ganz von den verschiedenen, einflussnehmenden Parametern ab.

Zur Durchführung des neuen Verfahrens wird ausgegangen von einer Einrichtung, bestehend aus einer Transportfläche als Unterlage, über welcher aufgabeseitig ein in Förderrichtung geneigter Aufgabetisch als geneigte Ebene angeordnet ist; aus einer über dem Aufgabetisch angeordneten Gemischaufgabevorrichtung mit quer hin- und herfahrbarem Mischkopf; aus einer von einer Rolle abziehbaren, auf der Transportfläche geförderten Deckschicht und einer in Förderrichtung hinter der Gemischaufgabevorrichtung angeordneten Egalisiervorrichtung, wobei der Förderweg der Deckschicht über den Aufgabetisch führt; und der Deckschicht Mittel zum anliegenden Führen zumindest im Bereich des Überganges zwischen Aufgabetisch und Transportfläche zugeordnet sind.

Das Neue besteht darin, dass

a) die Gemischaufgabevorrichtung ein in Förderrichtung der Deckschicht gerichtetes Auftragsrohr aufweist, welches an seiner untersten Mantellinie mit einer aus einer oder mehreren Öffnungen bestehenden, einen vorhangartigen Flachstrahl bewirkenden Auftragsdüse versehen ist, und

b) der sich zwischen der Gemischaufgabestelle bis in den Übergang zur Transportfläche erstreckende Bereich des Aufgabetisches bzw. der darüber geförderten Deckschicht die alleinige Egalisiervorrichtung für den Gemischfilm darstellt.

Von besonderer Wichtigkeit ist das Merkmal a), denn das demgemäss gestaltete Auftragsrohr erlaubt einen breiten Gemischauftrag und damit eine gute Vorverteilung. Das Merkmal b) ermöglicht es, ohne Egalisierspalt zu arbeiten, was insbesondere für Schaumstoffbahnen ohne obere Deckschicht unerlässlich ist. Die Transportfläche besteht beispielsweise aus einem Gleittisch oder, wie allgemein üblich, aus einem umlaufenden endlosen Band. Es versteht sich, dass die Einrichtung auch als sogenanntes Doppeltransportband ausgebildet sein kann, d.h. mit zusätzlichem Oberband, wie es für die Herstellung von Sandwichbahnen seit vielen Jahren üblich ist. Auch bei Doppeltransportbändern ist die neuartige Technik zum Herstellen eines gleichmässigen Gemischfilmes von Vorteil, weil ein homogenerer Schaumstoffkern erzielbar ist. Man kann in diesem Falle die obere Deckschicht direkt an das Untertrum des Oberbandes anliegend einlaufen lassen oder man benutzt eine Rakel oder Walze, um das Gemisch beispielsweise aus reaktionstechnischen Gründen früher abdecken zu können. In diesem Falle hat die Walze oder Rakel aber nicht die Funktion einer Egalisiervorrichtung, sondern dient lediglich der Bahnführung.

Soll die vorbeschriebene Einrichtung nur zur Herstellung eines einzigen Produktes verwendet werden, so muss die Neigung des Aufgabetisches und die Länge der Fliessstrecke auf die Produkt-spezifischen vorrichtungs-verfahrenstechnischen Parameter abgestimmt sein. Da aber eine solche Einrichtung in aller Regel für die Herstellung unterschiedlicher Produkte verwendbar sein soll, sind vorzugsweise folgende besonderen Ausführungsformen allein oder in Kombination sinnvoll:

Nach einer ersten besonderen Ausführungsform ist der Aufgabetisch in seiner Neigung einstellbar.

Durch entsprechende Neigung lässt sich die Fliessgeschwindigkeit des Reaktionsproduktes im Bereich des Aufgabetisches beeinflussen.

Nach einer weiteren Ausführungsform ist der Aufgabetisch und/oder die Gemischaufgabevorrichtung in Förderrichtung verstellbar.

Durch diese Massnahme lässt sich die Länge der Fliessstrecke einstellen.

Vorzugsweise ist der Abstand des Auftragsrohres von dem Aufgabetisch einstellbar.

Durch diese Einstellmöglichkeit lässt sich insbesondere im Hinblick auf die Viskosität des Reaktionsgemisches eine gute Strahlbildung sicherstellen.

Nach einer weiteren besonderen Ausführungsform ist das Auftragsrohr in der senkrechten Ebene schwenkbar.

Dadurch wird erreicht, dass der austretende Strahl zwischen Auftragsrohr und Deckschicht an seinem einen Ende einen weiteren Weg im freien Fall zurückzulegen hat als im anderen. Hiermit lässt sich auch das Auftreffen des Strahles auf die Deckschicht beeinflussen.

Gemäss einer weiteren besonderen Ausführungsform ist die Öffnungsweite der Auftragsdüse einstellbar.

Dies ist dann von Vorteil, wenn verschiedene viskose Reaktionsgemische und/oder verschiedene Auftragsmengen verarbeitet werden müssen.

Vorzugsweise ist der Aufgabetisch mit einer Temperiereinrichtung versehen.

Damit lässt sich die Fliessgeschwindigkeit des Reaktionsgemisches beeinflussen. Je nach den Erfordernissen kann gekühlt oder geheizt werden. Die Temperiervorrichtung weist vorzugsweise verschiedene Kammern auf, die unabhängig voneinander temperierbar sind.

In der Zeichnung ist die neue Einrichtung in der Ausführungsform eines Doppeltransportbandes rein schematisch dargestellt und nachstehend näher erläutert. Es zeigen:

Fig. 1 die Einrichtung in der Seitenansicht und
Fig. 2 die Einrichtung in der Draufsicht.

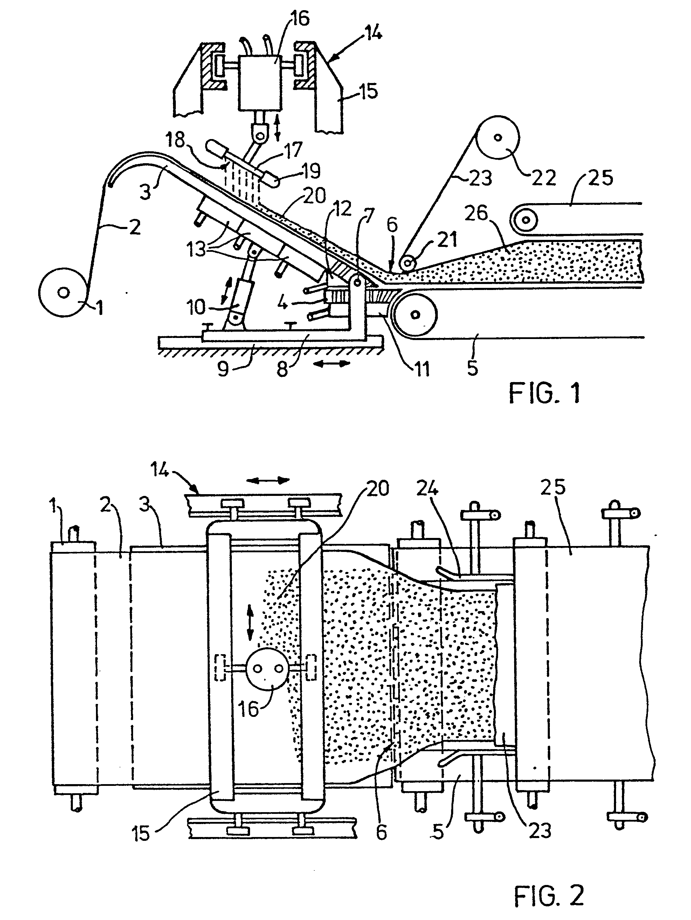

Von einer Vorratsrolle 1 führt der Weg einer unteren Deckschicht 2 über eine als Aufgabetisch 3 ausgebildete geneigte Ebene, welche mit einer horizontalen Transportfläche, bestehend aus Gleitplatte 4 und Unterband 5, einen knickartigen Übergang 6 bildet. Der Aufgabetisch 3 ist mittels einer Achse 7 auf einem Gleitschlitten 8 gelagert, welcher auf Schienen 9 in Förderrichtung verstellbar angeordnet ist. Mittels einer verstellbaren Stütze 10 ist die Neigung des Aufgabetisches 3 einstellbar. Der Gleitplatte 4 und dem unteren Ende des Aufgabetisches 3 sind Saugkästen 11, 12 zugeordnet. Im Bereich der Saugkästen 11, 12 sind der Aufgabetisch 3 und die Gleitplatte 4 durchlöchert, so dass die Deckschicht 2 unter der Saugwirkung anliegend geführt wird. An der Unterseite des Aufgabetisches 3 ist eine aus mehreren Kammern bestehende Temperiereinrichtung 13 angeordnet. Über dem Aufgabetisch 3 ist eine Auftragsvorrichtung 14 vorgesehen. Sie besteht aus einem in Förderrichtung des Transportbandes verstellbaren Portal 15, an welchem ein Mischkopf 16 quer hin- und herfahrbar angeordnet ist. Am Mischkopf 16 ist ein höhenverstellbares Auftragsrohr 17 vorgesehen, welches auch noch in der senkrechten Ebene schwenkbar ist, so dass es gewünschtenfalls parallel zum Aufgabetisch 3 einstellbar ist. Das Auftragsrohr 17 weist an seiner unteren Mantellinie eine Schlitzdüse 18 auf. Sie ist mittels einstellbarer Hülsen 19 teilweise abdeckbar. Infolge des kontinuierlichen Vorschubes der Deckschicht 2 und der oszillierenden Bewegung des Mischkopfes 16 entsteht ein zickzackförmiger Gemischauftrag, welcher im Bereich des Aufgabetisches 3 zu einem gleichmässigen Gemischfilm 20 verläuft. Hinter dem Übergang 6 ist eine Umlenkwalze 21 angeordnet, mittels welcher eine von einer Vorratsrolle 22 abgezogene obere Deckschicht 23 auf das Reaktionsgemisch aufgelegt wird (nur Fig. 1). Diese Umlenkwalze 21 hat keinerlei Egalisierfunktion, zumal an dieser Stelle das Reaktionsgemisch bereits im Aufschäumen begriffen ist. Verstellbare Seitenleisten 24 und ein Oberband 25 begrenzen den Raum, in welchem die Schaumstoffbahn 26 gebildet wird.

**Verfahrensbeispiel**

Die Einrichtung arbeitet mit einer Fördergeschwindigkeit von 8,0 m/Min. Der Mischkopf 16 oszilliert mit einer Geschwindigkeit von 90 m/Min. Die Arbeitsbreite beträgt 1,20 m. Die Viskosität des Reaktionsgemisches beim Austritt aus dem Auftragsrohr 17 ist 400 mPas. Der senkrechte Abstand des Auftragsrohres 17 von der Deckschicht 2 beträgt 15 cm. Die Abdeckhülsen 19 sind so eingestellt, dass die Strahlbreite 13 cm beträgt. Es werden 8,5 l/Min. Reaktionsgemisch ausgestossen. Der Aufgabetisch 3 ist auf eine Neigung von 17° eingestellt. Die Fliessstrecke von der Mitte des Auftragsrohres 17 bis in den knickartigen Übergang 6 beträgt 35 cm. Es wird ein Reaktionsgemischfilm in einer Dicke von 1,0 mm erzeugt, welcher zu einer Schaumstoffbahn von 3 cm Dicke aufschäumt. Vor dem Auftragsbereich wird der Aufgabetisch auf 25°C temperiert, im Auftragsbereich auf 25°C und im unteren Bereich auf 35°C. Als Deckschichten 2, 23 dienen Papierbahnen.

**Patentansprüche**

1. Verfahren zum kontinuierlichen Herstellen von Schaumstoffbahnen (26) mit mindestens einer von einer Rolle (1) abziehbaren Deckschicht (2), wobei diese Deckschicht (2) auf einer horizontalen oder leicht geneigten Unterlage (4, 5) gefördert wird und ein fliessfähiges Reaktionsgemisch auf eine der Unterlage (4, 5) zugeordnete, geneigte Ebene (3) mittels eines über die Arbeitsbreite hin- und herwandernden Strahles aufgetragen wird; auf dieser Ebene herabläuft und mit der Deckschicht (2) gefördert und auf ihr egalisiert wird; zur Schaumstoffbahn (26) aufschäumt und schliesslich das Produkt aus Schaumstoffbahn (26) und Deckschicht (2) von der Unterlage (4, 5) abgenommen wird, wobei die Deckschicht (2) über die geneigte Ebene (3) an dieser anliegend gleitend geführt wird, dadurch gekennzeichnet, dass

a) das Reaktionsgemisch auf die Deckschicht (2) als ein sich in Förderrichtung vorhangartig erstreckender, flacher Strahl aufgegeben wird; und

b) die Bildung eines gleichmässig dicken Gemischfilms (20) auf der Deckschicht (2) lediglich durch Fliessen des Reaktionsgemisches während des Transportes der Deckschicht (2) auf der geneigten Ebene (3) zwischen der Aufgabestelle bis in den Übergang (6) auf die Unterlage (4, 5) durchgeführt wird.

2. Verfahren nach Anspruch 1, dadurch gekennzeichnet, dass die Bildung des gleichmässig dicken Gemischfilmes (20) durch Temperierung beeinflusst wird.

3. Einrichtung zur Durchführung des Verfahrens gemäss Anspruch 1, bestehend aus einer Transportfläche (4, 5) als Unterlage, über welcher aufgabeseitig ein in Förderrichtung geneigter Aufgabetisch (3) als geneigte Ebene angeordnet ist; aus einer über dem Aufgabetisch (3) angeordneten Gemischaufgabevorrichtung (14) mit quer hin- und herfahrbarem Mischkopf (16); aus einer von einer Rolle (1) abziehbaren, auf der Transportfläche (4, 5) geförderten Deckschicht (2) und einer in Förderrichtung hinter der Gemischaufgabevorrichtung (14) angeordneten Egalisiervorrichtung, wobei der Förderweg der Deckschicht (2) über den Aufgabetisch (3) führt; und der Deckschicht (2) Mittel (11, 12) zum anliegenden Führen zumindest im Bereich des Überganges (6) zwischen Aufgabetisch (3) und Transportfläche (4, 5) zugeordnet sind; dadurch gekennzeichnet, dass

a) die Gemischaufgabevorrichtung (14) ein in Förderrichtung der Deckschicht (2) gerichtetes Auftragsrohr (17) aufweist, welches an seiner untersten Mantellinie mit einer aus einer oder mehreren Öffnungen bestehenden, einen vorhangartigen Flachstrahl bewirkenden Auftragsdüse (18) versehen ist, und

b) der sich zwischen der Gemischaufgabestelle bis in den Übergang (6) zur Transportfläche (4, 5) erstreckende Bereich des Aufgabetisches (3) bzw. der darüber geförderten Deckschicht (2) die alleinige Egalisiervorrichtung für den Gemischfilm (20) darstellt.

4. Einrichtung nach Anspruch 3, dadurch gekennzeichnet, dass der Aufgabetisch (3) in seiner Neigung einstellbar ist.

5. Einrichtung nach Anspruch 3 oder 4, dadurch gekennzeichnet, dass der Aufgabetisch (3) in Förderrichtung verstellbar ist.

6. Einrichtung nach einem der Ansprüche 3 bis 5, dadurch gekennzeichnet, dass die Gemischaufgabevorrichtung (14) in Förderrichtung verstellbar ist.

7. Einrichtung nach einem der Ansprüche 3 bis 6, dadurch gekennzeichnet, dass der Abstand des Auftragsrohres (17) von dem Aufgabetisch (3) einstellbar ist.

8. Einrichtung nach Anspruch 7, dadurch gekennzeichnet, dass das Auftragsrohr (17) in der senkrechten Ebene schwenkbar ist.

9. Einrichtung nach einem der Ansprüche 3 bis 8, dadurch gekennzeichnet, dass die Öffnungsweite der Auftragsdüse (18) einstellbar ist.

10. Einrichtung nach einem der Ansprüche 3 bis 9, dadurch gekennzeichnet, dass der Aufgabetisch (3) mit einer Temperiereinrichtung (13) versehen ist.

## Claims

1. Process for the continuous production of foam webs (26) having at least one cover layer (2) which may be drawn off from a roller (1), in which this cover layer (2) is transported on a horizontal or slightly inclined substrate (4, 5), and a flowable reaction mixture is applied by a jet which moves from side to side over the working width to an inclined plane (3) allocated to the substrate (4, 5); the mixture flows down this plane and is transported with the cover layer (2) and is levelled thereon; foams into a foam web (26) and finally the product of foam web (26) and cover layer (2) is removed from the substrate (4, 5), the cover layer (2) being guided in a sliding manner over the inclined plane (3) against which it lies, characterised in that

a) the reaction mixture is charged onto the cover layer (2) as a flat jet extending like a curtain in the direction of transport; and

b) the formation of a uniformly thick mixture film (20) on the cover layer (2) is carried out merely by flow of the reaction mixture during the transport of the cover layer (2) on the inclined plane (3) between the charging point up into the transition (6) to the substrate (4, 5).

2. Process according to claim 1, characterised in that the formation of the uniformly thick mixture film (20) is influenced by a temperature control.

3. Apparatus for carrying out the process according to claim 1, consisting of a transport surface (4, 5) as the substrate, above which a charging table (3), inclined in the direction of transport is positioned on the charging side as an inclined plane; a mixture charging device (14) positioned above the charging table (3) and having a mixing head (16) which may be moved to and fro transversely; a cover layer (2) which may be drawn off from a roller (1) and is conveyed on the transport surface (4, 5), and a levelling device (3) positioned in the direction of transport downstream of the mixture charging device (14), the transport path of the cover layer (2) leading over the charging table (3); and means (11, 12) being assigned to the cover layer (2) for the touching guidance at least in the region of the transition (6) between the charging table (3) and the transport surface (4, 5); characterised in that

a) the mixture charging device (14) has an application pipe (17) which is directed in the direction of transport of the cover layer (2) and is provided at its lowest generating line with an application nozzle (18) consisting of one or more openings and effecting a curtain-like flat jet, and

b) the region of the charging table (3), or of the cover layer (2) conveyed thereover, extending between the mixture charging point up into the transition (6) to the transport surface (4, 5), represents the sole levelling device (3) for the mixture film (20).

4. Apparatus according to claim 3, characterised in that the incline of the charging table (3) may be adjusted.

5. Apparatus according to claim 3 or 4, characterised in that the charging table (3) may be adjusted in the direction of transport.

6. Apparatus according to one of claims 3 to 5, characterised in that the mixture charging device (14) may be adjusted in the direction of transport.

7. Apparatus according to one of claims 3 to 6, characterised in that the spacing of the application pipe (17) from the charging table (3) is adjustable.

8. Apparatus according to claim 7, characterised in that the application pipe (17) may be pivoted in the vertical plane.

9. Apparatus according to one of claims 3 to 8, characterised in that the aperture width of the application nozzle (18) is adjustable.

10. Apparatus according to one of claims 3 to 9, characterised in that the charging table (3) is provided with a temperature-control device (13).

## Revendications

1. Procédé pour la fabrication continue de bandes de mousse (26) comportant au moins une couche de recouvrement (2) pouvant être prélevée sur une bobine (1), cette couche de recouvrement étant transportée sur un support horizontal ou faiblement incliné (4, 5) et un mélange de réaction fluide étant appliqué sur un plan incliné (3) associé au support (4, 5) au moyen d'un jet animé d'un mouvement de va-et-vient suivant la largeur de travail; s'écoulant sur ce plan et étant transporté avec la couche de recouvrement (2) et égalisé sur celle-ci; expansé en une bande de mousse (26) et enfin le produit consistant en bande de mousse (26) et couche de recouvrement (2) étant retiré du support (4, 5), la couche de recouvrement (2) étant entraînée sur le plan incliné (3) en glissement au contact de celui-ci, caractérisé en ce que:

a) le mélange de réaction est appliqué sur la couche de recouvrement (2) sous forme d'un jet plat s'étalant à la manière d'un rideau dans la direction de transport; et

b) la formation d'un film de mélange (20) d'épaisseur uniforme sur la couche de recouvrement (2) est mise en œuvre seulement par écoulement du mélange de réaction pendant le transport de la couche de recouvrement (2) sur le plan incliné (3) entre le point d'alimentation et le passage (6) sur le support (4, 5).

2. Procédé selon la revendication 1, caractérisé en ce que la formation du film de mélange (20) d'épaisseur uniforme est influencée par équilibrage de température.

3. Installation pour la mise en œuvre du procédé selon la revendication 1, consistant en une surface de transport (4, 5) comme support, sur laquelle est disposée du côté de l'alimentation une table de chargement (3) sous forme d'un plan incliné dans la direction de transport; en un dispositif (14) d'alimentation en mélange disposé au-dessus de la table de chargement (3) et muni d'une tête mélangeuse(16)déplaçable en mouvement alternatif; en une couche de recouvrement (2), pouvant être prélevée sur une bobine (1), transportée sur la surface de transport (4, 5), et en un dispositif d'égalisation disposé après le dispositif d'alimentation en mélange (14), dans la direction de transport, le parcours de la couche de recouvrement (2) conduisant sur la table de chargement (3); et des moyens (11, 12) étant associés à la couche de recouvrement (2) pour le transport contigu au moins dans la zone du passage (6) entre la table de chargement (3) et la surface de transport (4, 5); caractérisée en ce que:

a) le dispositif (14) d'alimentation en mélange présente un tube d'alimentation (17) orienté dans la direction de transport de la couche de recouvrement (2), qui est muni sur sa génératrice inférieure d'une buse d'application (18), consistant en une ou plusieurs ouvertures, produisant un jet plat en forme de rideau et

b) la zone de la table de chargement (3) ou de la couche de recouvrement (2) transportée sur celle-ci s'étendant entre le point de chargement en mélange et le passage (6) sur la surface de transport (4, 5) constitue le seul dispositif d'égalisation pour le film de mélange (20).

4. Installation selon la revendication 3, caractérisée en ce que la table de chargement (3) est d'inclinaison réglable.

5. Installation selon la revendication 3 ou 4, caractérisée en ce que la table de chargement (3) est déplaçable dans la direction de transport.

6. Installation selon l'une des revendications 3 à 5, caractérisée en ce que le dispositif (14) d'alimentation en mélange est déplaçable dans la direction de transport.

7. Installation selon l'une des revendications 3 à 6, caractérisée en ce que le tube d'alimentation (17) est à une distance réglable de la table de chargement (3).

8. Installation selon la revendication 7, caractérisée en ce que le tube d'alimentation (17) peut osciller dans le plan vertical.

9. Installation selon l'une des revendication 3 à 8, caractérisée en ce que la largeur d'ouverture de la buse d'alimentation (18) est réglable.

10. Installation selon l'une des revendications 3 à 8, caractérisée en ce que la table de chargement (3) est munie d'un dispositif d'équilibrage de température (13).

FIG. 1

FIG. 2